# EUROPÄISCHE PATENTSCHRIFT

(11) **EP 0 803 480 B1**
(45) Veröffentlichungstag und Bekanntmachung des Hinweises auf die Patenterteilung: **20.06.2001**
(21) Anmeldenummer: 97105184.2
(22) Anmeldetag: 27.03.1997
(51) Int. Cl.: C03C 8/14, C03C 17/02

(54) **Teilweises Kristallisieren von kristallinem Zink-Borat-Kristallkeimmaterial enthaltender Emaille**
Partial crystallization of enamel containing zinc borate seed crystals
Cristallisation partielle d'émail contenant des germes cristallins de borate de zinc

(30) Priorität: 25.04.1996 US 637445
(43) Veröffentlichungstag der Anmeldung: 29.10.1997
(73) Patentinhaber: dmc2 Degussa Metals Catalysts Cerdec AG, 60287 Frankfurt am Main (DE)
(72) Erfinder: Sakoske, George E., Mayfield Heights, Ohio 44124 (US)

(56) Entgegenhaltungen:
- US-A- 5 153 150
- US-A- 5 286 270
- CHEMICAL ABSTRACTS, vol. 121, no. 20, 14.November 1994 Columbus, Ohio, US; abstract no. 236715, NAGAYANAGI, TATSUICHI ET AL: "Study of crystal glaze" XP002036397 & AICHI-KEN TOKONAME YOGYO GIJUTSU SENTA HOKOKU (1994), 21, 22-7 CODEN: ATYHD7;ISSN: 0385-6860, 1994,

## Beschreibung

### GEBIET DER ERFINDUNG

Die vorliegende Erfindung betrifft zinkhaltige Keramikemaillen, die als farbige Borten von Glas in Kraftfahrzeugen verwendet werden können.

### HINTERGRUND DER ERFINDUNG

Keramikemaillen können in einer Vielzahl von Anwendungsbereichen zum Einsatz kommen, wie zum Beispiel als dekorativer Überzug von Glaswaren, Porzellan und dergleichen. In den letzten Jahren fanden sie auch als farbige Borten um Glasplatten Verwendung, die als Windschutzscheiben, Seitenlampen und Rücklichter in Kraftfahrzeugen verwendet werden. Die farbigen Borten verbessern das Aussehen und verhindern den Abbau darunterliegender Klebstoffe durch UV-Strahlung.

Gewöhnlich bestehen diese Emaille-Zusammensetzungen in erster Linie aus einer Glasfritte, einem Färbemittel und einem organischen Bindemittel. Diese werden auf ein Glassubstrat aufgetragen und anschließend gebrannt, um das organische Bindemittel auszubrennen und die Fritte auf das Substrat aufzuschmelzen.

In Kraftfahrzeugen verwendete Glasplatten werden im allgemeinen mit der Keramikemaille-Zusammensetzung überzogen und anschließend bei erhöhten Temperaturen einem Formstanzverfahren unterzogen. Während dieser Behandlung schmilzt die Emaille und wird auf das Glassubstrat aufgebrannt, wonach das Glas seine gewünschte endgültige Form erhält. Viele bekannte Überzüge neigen jedoch dazu, an den Materialien zu haften, die die Stanzform (z.B. mit Faserglas oder Metallfaser umhüllte Stanzformen) bedecken, da diese konventionellen Emaillen nach dem Schmelzen eine niedrige Viskosität aufweisen und dazu neigen, bei hohen Temperaturen an anderen Materialien festzukleben. Demzufolge eignen sich solche zuvor genannten Emaillen nicht für den Gebrauch in Glasformungsverfahren, bei denen das mit Emaille überzogene und erhitzte Glas mit einer Formstanze in Kontakt kommt.

Es wurden verschiedene Vorschläge dahingehend gemacht, das Formen von mit Keramikemaille überzogenen Glasplatten zu vereinfachen und eine Beständigkeit gegen erhöhte Biege-und Formungstemperaturen zu erzielen, ohne daß die Emaille an der Formstanze haftet. Die US-Patente Nr. 4,596,590 und 4,770,685 schlagen beispielsweise das Hinzufügen eines Metalloxidpulvers mit niedriger Wertigkeit, wie zum Beispiel Kupferoxid, zu der Farbzusammensetzung vor, um eine nichtklebende Barriere zwischen dem Überzug und der mit Faserglas bedeckten Formstanze zu erzeugen. In den US-Patenten Nr. 4,684,389; 4,857,096; 5,037,783 und der EP 490,611 (an Boaz ausgestellt) wird das Hinzufügen von feinverteiltem Zinkmetallpulver zur Erzielung einer ähnlichen Wirkung vorgeschlagen. In dem US-Patent Nr. 4,983,196 (auf Stotka ausgestellt) wird die Verwendung eines Eisenmetallpulvers vorgeschlagen.

Eine anscheinend verbesserte Antihaft-Keramikemaille-Zusammensetzung wird in den US-Patenten Nr. 5,153,150; 5,208,191 und 5,286,270 (an Ruderer et al. ausgestellt) beschrieben, bei der ein Zn₂SiO₄-haltiges Kristallkeimpulver einer Oxidzusammensetzung in An- oder Abwesenheit von Wismutoxid (Bi₂O₃) zugegeben wird.

Ein weiterer Nachteil einer Reihe bisheriger Keramikemaillesysteme besteht darin, daß sie eine bleihaltige Glasfritte verwenden. Die Verwendung bleihaltiger Systeme ist aus Umweltschutzgründen nicht wünschenswert.

Zwar erbringen mehrere der zuvor genannten Emaillesysteme in konventionellen Glasformungsverfahren wohl eine zufriedenstellende Leistung, doch sind einige möglicherweise nicht für den Gebrauch in den neu entwickelten "Tiefbiege"-Verfahren zur Formung von Kfz-Glas geeignet. Desweiteren müssen Emaille-Zusammensetzungen gegen chemische Mittel beständig sein, mit denen sie möglicherweise in Kontakt kommen.

Bisher bekannte beziehungsweise vorgeschlagene Emaille-Zusammensetzungen weisen eine oder mehrere der obengenannten Unzulänglichkeiten auf. Im Gegensatz hierzu stellt die vorliegende Erfindung eine Keramikemaille-Zusammensetzung zur Verfügung, die diese Nachteile überwindet.

### KURZBESCHREIBUNG DER ERFINDUNG

Die vorliegende Erfindung betrifft eine Keramikemaille-Zusammensetzung, die nach dem Aufschmelzen bei hoher Temperatur ein wenigstens teilweises kristallines Zink-Borat-Material auf einem Glassubstrat bildet.

Eine erfindungsgemäße Keramikemaille-Zusammensetzung umfaßt 30-80 Gew.-% einer zinkhaltigen Oxidfritte, 1-25 Gew.-% eines kristallinen Zink-Borat-Kristallkeimmaterials, 20-35 Gew.-% eines Pigmentes und 10-40 Gew.-% eines organischen Bindemittels. Das Zink-Borat-Kristallkeimmaterial liegt vorzugsweise in der Form von Impfkristallen in der Zusammensetzung vor und kann ferner, nach dem Brennen der Zusammensetzung, aus Zinkoxid und Boroxid in der Zusammensetzung, z.B. wie durch die zinkhaltige Oxidfritte erzeugt, gewonnen werden, wie dies der Fall ist, wenn das Kristallkeimmaterial Kerne für weiteres Kristallwachstum liefert.

Das kristalline Zink-Borat-Kristallkeimmaterial liegt in der Zusammensetzung vorzugsweise in der Form von Impfkristallen vor. Das kristalline Kristallkeimmaterial kann aus einer bekannten Phase des Zn/B-Phasensystems gewählt werden. Vorzugsweise enthalten die Zink-Borat-Impfkristalle wenigstens eine Phase, die aus Zn₃B₂O₆ und Zn(BO₂)₂ ausgewählt ist.

Bei dem Verfahren zum Zubereiten einer sofort verfügbaren Keramik-Emaille-Zusammensetzung werden die zuvor genannten Komponenten in den gewünschten Mengen in keiner bestimmten Reihenfolge miteinander verbunden.

Die Erfindung betrifft außerdem ein Verfahren zum Verwenden der zuvor genannten Keramikemaille mit einem Glassubstrat, um eine farbige Borte und/oder UV-beständige Borte um dessen Peripherie zu bilden. Somit wird ein Glassubstrat mit einem Keramikemaille-Überzug versehen, indem eine zuvor genannte Keramikemaille-Zusammensetzung auf das Glassubstrat aufgetragen und das überzogene Glassubstrat zum Aufschmelzen der Komponenten der Keramikemaille-Zusammensetzung auf das Glassubstrat gebrannt wird.

Folglich wird ein Glassubstrat mit einem daran haftenden Keramikemaille-Überzug betrachtet, bei dem der Keramikemaille-Überzug wenigstens zum Teil aus einem kristallinen Zink-Borat-Material besteht. Vorzugsweise wird der Überzug auf wenigstens einen Teil der Peripherie des Glassubstrats aufgetragen.

Ferner wird ein Verfahren zum Formen eines mit einem sofort verfügbaren Überzug versehenen Glassubstrats beschrieben, umfassend die folgenden Schritte: (a) Auftragen einer zuvor genannten Keramikemaille-Zusammensetzung auf ein Glassubstrat; (b) Erhitzen des überzogenen Glases auf eine erhöhte Temperatur von vorzugsweise wenigstens 1200°F und noch mehr bevorzugterweise etwa 1300°F; (c) Ausüben eines konventionellen Formungsdrucks mit einer Formstanze auf das erhitzte Glas, der gewöhnlich im Bereich zwischen 1 und 3 psi (aber nicht auf diesen Bereich beschränkt ist) und vorzugsweise bei etwa 2 psi liegt; und (d) Trennen des geformten Glases von der Formstanze.

Zu den Vorzügen sofort verfügbarer Emaille zählen ihre ausgezeichneten Antihafteigenschaften, ihre gute Konsistenz, ihr großer Brand-Temperaturbereich, ihre niedrige Spannung und ihr niedriger Preis.

Die Erfindung wird nachfolgend ausführlicher unter Bezugnahme auf Beispiele beschrieben.

### AUSFÜHRLICHE BESCHREIBUNG DER ERFINDUNG

Die vorliegende Erfindung stellt eine Keramikemaille-Zusammensetzung zur Verfügung, die wenigstens ein Zink-Borat-Kristallkeimmaterial als Komponente enthält. Ein solches Zink-Borat-Kristallkeimmaterial wird nachstehend ausführlicher beschrieben.

Eine erfindungsgemäße Zusammensetzung enthält die folgenden Komponenten: (1) wenigstens eine konventionelle zinkhaltige Oxid-Glasfritte; (2) ein Zink-Borat-Kristallkeimmaterial; (3) ein Färbemittel (Pigment); und (4) ein Bindemittel für die Komponenten (1) - (3). Von dem Zink-Borat-Kristallkeimmaterial wird angenommen, daß es nach dem Brennen die Kristallkeimbildung und das Wachstum mikrokristalliner Strukturen, z.B. kristalline Zink-Borat-Phasen, in der Zusammensetzung fördert. Zwar ist ein Bindemittel (4) in der Zusammensetzung von Vorteil, doch kann es auch weggelassen und erst später aufgetragen werden, z.B. beim Siebdrucken, ohne daß vom Wesen der vorliegenden Erfindung abgewichen wird.

Gewöhnlich umfaßt eine sofort verfügbare Keramikemaille-Zusammensetzung 30-80 Gew.-% einer zinkhaltigen Oxidfritte, 1-25 Gew.-% eines Zink-Borat-Kristallkeimmaterials, 20-35 Gew.-% eines Pigmentes und 10-40 Gew.-% eines organischen Bindemittels. Vorzugweise ist ein Zink-Borat-Kristallkeimmaterial in einer Menge von 10-20 Gew.-% (7,5-15 Gew.-% einschließlich organischer Stoffe) und die zinkhaltige Oxidfritte in einer Menge von 47-62 Gew.-% (45-50 Gew.-% einschließlich organischer Stoffe) vorhanden.

Die hierin enthaltenen Begriffe Kristall, kristallin, mikrokristallin usw. besagen, daß das fragliche Material ausreichend kristallin (angeordnet) ist, um mit Röntgenbeugungstechniken eine oder mehrere diskrete Phase(n) aufzudecken.

Zwar möchten wir uns nicht von der Theorie festlegen lassen, doch gehen wir davon aus, daß die Anwesenheit des Zink-Borat-Kristallkeimmaterials zur Kristallkeimbildung und zum Wachstum von Kristallen führt, was eine erhöhte Feuerbeständigkeit und Entglasung zur Folge hat. Die Entglasung umfaßt eine Trennung von mikrokristallinen Strukturen, wie zum Beispiel Zn₃B₂O₆ und Zn(BO₂)₂ und dergleichen in der aufgeschmelzten Emaille. Es wird angenommen, daß durch die Anwesenheit dieser mikrokristallinen Strukturen in der aufgeschmelzten Emaille die Neigung der Emaille, während des Formens des Glassubstrates bei erhöhten Temperaturen an Oberflächen, z.B. Preßkissen, zu kleben, stark reduziert wird.

Als zinkhaltige Oxidfritte, die im Rahmen der Erfindung verwendet wird, kann eine konventionelle Keramikoxidfritte wie zum Beispiel eine Fritte auf der Basis von Zink verwendet werden. Die Fritte kann neben einer Zinkquelle auch eine Borquelle enthalten. Es können zum Beispiel eine Fritte bestehend aus Zinkoxid und Boroxid und eventuell zusätzliche Materialien verwendet werden. Darüber hinaus kann auch eine Fritte bestehend aus Zink-Borosilicat oder eine Fritte bestehend aus einem nichtkristallinen Zink-Borat-Material verwendet werden. Vorzugsweise ist eine solche Fritte so formuliert, daß sie beim Erhitzen die erforderlichen mikrokristallinen Zink-Borat-Strukturen in situ erzeugt. Für eine zinkhaltige Fritte mit den gewünschten Eigenschaften kann ein Gemisch aus zwei oder mehreren konventionellen Glasfritten verwendet werden.

Vorzugsweise ist ein kristallines Zink-Borat-Kristallkeimmaterial jedoch direkt in der Emaille-Zusammensetzung enthalten. Das kristalline Zink-Borat-Kristallkeimmaterial kann in hohen Konzentrationen in der Zusammensetzung enthalten sein, z.B. zu 25% oder mehr der in der Zusammensetzung anwesenden Feststoffe. Allerdings ist die Anwesenheit von wenigstens einer gewissen Menge an Oxidfritte in der Zusammensetzung wünschenswert, damit ein Flußmittel vorhanden ist.

Die für diese Art von reaktivem System bevorzugten Zink-Borat-Kristallkeimmaterialien können die Phasen Zn₃B₂O₆ und Zn(BO₂)₂ und Gemische davon umfassen, sind jedoch nicht darauf beschränkt. Jede bzw. alle dieser Verbindungen sind vorzugsweise kristallin und können als ein Gemisch innerhalb des gleichen kristallinen Materials vorliegen.

Ein für den Gebrauch in der vorliegenden Erfindung geeignetes kristallines Zink-Borat-Kristallkeimmaterial kann unter Anwendung mehrerer gut bekannter Verfahren zubereitet werden. Zn₃B₂O₆ (CAS-Reg.-Nr. 1332-07-6) kann zum Beispiel durch Erhitzen von Zinkoxid (ZnO) und H₃BO₃ in einem Molverhältnis von 3:2 bei 1000°C für 48 Stunden zubereitet werden. Zn(BO₂)₂ (CAS-Reg.-Nr. 1332-07-6) kann durch Mischen von Zinkoxid und Boroxid in einem Molverhältnis von 1:1 und Erhitzen des Gemischs auf 600-900°C zubereitet werden. Andere Verfahren zum Zubereiten dieser und verwandter Materialien werden dem Fachkundigen sofort offenkundig sein.

Die Partikelgröße eines sofort verfügbaren Zink-Borat-Kristallkeimmaterials liegt vorzugsweise zwischen 1 und 4 Mikron, noch stärker bevorzugt werden etwa 1,8 Mikron.

Zusätzliche kristalline Materialien wie z.B. Aluminiumoxid-Silicat-Verbindungen, Calcium-Silicat-Verbindungen, Bor-Aluminiumoxid-Silicat-Verbindungen, Soda-Calciumoxid-Aluminiumoxid-Silicat-Verbindungen, Feldspat-Verbindungen, Titaniumoxid und Gemische davon können als Füllstoffe in der Formulierung verwendet werden. Darüber hinaus können Metall- und/oder Oxidmaterialien besonders dann hinzugefügt werden, wenn deren Anwesenheit die Kristallkeimbildung und das Wachstum der erforderlichen mikrokristallinen Zink-Borat-Strukturen fördert.

Zur Zeit enthält eine erfindungsgemäße Emaille-Zusammensetzung vorzugsweise eine Grundglasfritte, die wenigstens eine konventionelle zinkhaltige Fritte ist, wie zum Beispiel solche, die kommerziell von Cerdec Corporation (Washington, PA) erhältlich sind. Um die gewünschten Eigenschaften zu erhalten, können solche Fritten alleine verwendet oder gemischt werden. Gewöhnlich sind diese Fritten aufgrund der zuvor erwähnten Umweltschutzüberlegungen bleifrei, doch ist der Gebrauch von bleihaltigen Fritten, wo es die Gegebenheiten zulassen, nicht ausgeschlossen. Andere geeignete zinkhaltige Fritten sind in Fachkreisen gut bekannt.

Eine charakteristische Formulierung einer geeigneten zinkhaltigen Fritte hat die folgende Zusammensetzung:

| Oxid | Gew.-%-Bereich |
|---|---|
| SiO ₂ | 10 - 25 |
| Bi ₂ O ₃ | 0 - 15 |
| ZnO | 10 - 50 |
| B ₂ O ₃ | 20 - 40 |
| Na ₂ O | 7 - 10 |
| CaO | 0 - 10 |
| TiO ₂ | 0 - 2 |
| Al ₂ O ₃ | 0 - 5 |
| ZrO ₂ | 0 - 2 |
| F ₂ | 0 - 2 |

In dem US-Patent Nr. 5,346,651 (auf Oprosky et al ausgestellt) ist ein Verfahren zum Herstellen einer solchen Fritte beschrieben. Die Fritten haben eine ausreichend niedrige Brenntemperatur, so daß eine angemessene Haftung an dem Substrat gewährleistet sind, und sie besitzen auch eine geringe Dichte.

Exemplarische zinkhaltige Fritten, die in Verbindung mit der Erfindung geeignet sind, sind kommerziell von Cerdec Corporation erhältlich (E-8012, RD-2012, PD997, GAL1943 und RD-2060).

Das für eine erfindungsgemäße Keramikemaille verwendete Pigment kann ein kommerziell erhältliches Pigment sein. Besonders bevorzugte Pigmente sind kommerziell von Cerdec Corporation erhältlich - *2991 Pigment, ein Kupfer-Chromat-Schwarzpigment; *2980 Pigment, ein Kobalt-Chrom-Eisen-Schwarzpigment; und *2987 Pigment, ein Nickel-Mangan-Eisen-Chrom-Schwarzpigment.

Das in den Zusammensetzungen verwendete Bindemittel wird auf der Basis seines Endbenutzungszweckes ausgewählt. Das Bindemittel sollte die suspendierten Partikel ausreichend in Suspension halten und nach dem Brennen der Zusammensetzung auf das Substrat vollständig ausbrennen. Bindemittel sind gewöhnlich organisch und umfassen Zusammensetzungen auf der Basis von Kiefernnadelölen, Pflanzenölen, Mineralölen, Erdölfraktionen von geringer Molekülmasse, Tridecylalkohol, synthetischen und natürlichen Harzen und dergleichen.

Demzufolge sind UV-Bindemittel gleichermaßen für den Gebrauch in der Erfindung geeignet. Solche UV-Bindemittel sind in Fachkreisen gut bekannt und bestehen gewöhnlich aus polymerisierbaren Monomeren und/oder Oligomeren, die zum Beispiel funktionelle Acrylat- oder Methacrylsäureester-Gruppen sowie Photoinitiatoren und Polymerisationsinhibitoren enthalten. Charakteristische Bindemittel sind in den US-Patenten Nr. 4,306,012 und 4,649,062 beschrieben. Es ist bekannt, daß solche Bindemittel nach dem Auftragen auf das Substrat mit ultravioletter Strahlung gehärtet werden.

Die Wahl des zu verwendenden spezifischen Bindemittels und der zu verwendenden Mengen richtet sich nach den spezifischen Komponenten der Zusammensetzung und der gewünschten Viskosität. Gewöhnlich liegt die Bindemittelmenge zwischen etwa 10 und 40 Gew.-% des Gesamtgewichtes der Emaille-Zusammensetzung.

Die Emaille-Zusammensetzungen sind ihrer Natur nach gewöhnlich viskos, wobei sich die Viskosität nach dem angewendeten Auftragsverfahren und dem Endgebrauch richtet.

Für Siebdruckverfahren sind Viskositäten zwischen 10.000 und 80.000 und vorzugsweise zwischen 35.000 und 65.000 Zentipoise bei 20°C geeignet, gemessen mit einem Brookfield-Viskositätsmesser mit Spindel Nr. 7 bei 20 U/min.

Eine erfindungsgemäße Emaille kann auch geläufige Füllstoffe wie Silika und Aluminiumoxid enthalten, sowie andere konventionelle Zusatzstoffe wie Eisen, Silicium, Zink und dergleichen, damit die gewünschten Eigenschaften wie Beständigkeit gegen Silber-Durchblutung optimiert werden.

Zum Zubereiten einer erfindungsgemäßen Emaille-Zusammensetzung wird eine Fritte unter Anwendung konventioneller Verfahren zu einem feinen Pulver gemahlen und in beliebiger Reihenfolge mit einem zuvor genannten Zink-Borat-Kristallkeimmaterial, einem Pigment, Füllstoffen und einem Bindemittel verbunden. Wenn das Zink-Borat-Kristallkeimmaterial der Zusammensetzung kristallin sein soll, so wird es ebenfalls zugegeben. Es können auch andere, zuvor erläuterte Oxide zugegeben werden, sowie Materialien, die gegen Silber-Durchblutung beständig sind. In der Emaille-Zusammensetzung kann mehr als ein Repräsentant jedes der zuvor genannten verschiedenen Komponententypen vorhanden sein.

Nach dem Zubereiten der Emaille-Zusammensetzung kann diese auf konventionelle Weise auf ein Glassubstrat aufgetragen werden, wie zum Beispiel durch Siebdrucken, Abziehen, Sprühen, Streichen, Walzbeschichten und dergleichen. Zum Auftragen der Zusammensetzung auf Glassubstrate wird der Siebdruck bevorzugt.

Nach dem Auftragen der Zusammensetzung auf ein Substrat in einem gewünschten Muster wird der aufgetragene Überzug gebrannt, um die Emaille an das Substrat zu binden. Die Brenntemperatur wird gewöhnlich durch die Fritten-Garbrandtemperatur bestimmt und liegt vorzugsweise in einem großen Temperaturbereich. Gewöhnlich liegt der Brennbereich einer sofort verfügbaren Zusammensetzung zwischen 1100 und 1350°F und vorzugsweise zwischen 1200 und 1300°F, noch mehr bevorzugt werden etwa 1250°F.

In den folgenden Beispielen sind bevorzugte Ausgestaltungen der Erfindung dargestellt. Sie sollen die Erfindung im Detail erläutern, grenzen die Erfindung allerdings nicht ein.

### Beispiel 1

Eine Emaille-Zusammensetzung bestehend aus den folgenden Komponenten wurde unter Anwendung konventioneller Verfahren zubereitet. Die angegebenen Gewichtsprozente wurden in Anlehnung daran berechnet, daß in der Zusammensetzung kein Druckmittel vorhanden ist.

| Komponente | Gew.-% |
|---|---|
| RD2060¹ | 32 |
| PD997¹ | 30 |
| ∗2991 Pigment² | 24 |
| Zink-Borat-Kristallkeim³ | 14 |

| | |
|---|---|
| ¹RD2060 und PD997 sind kommerziell von Cerdec Corporation erhältliche zinkhaltige Fritten. | |
| ²∗2991 Pigment ist kommerziell von Cerdec Corporation erhältlich. | |
| ³Zink-Borat-Impfkristalle wurden zubereitet, indem Zinkoxid und Boroxid wie beschrieben zur Reaktion gebracht wurden, wobei eine Röntgenkristallstrukturanalyse auf die Anwesenheit von Zn₃B₂O₆ hinwies. | |

### Beispiel 2

Eine Emaille-Zusammensetzung, die gemäß dem Verfahren von Beispiel 1 zubereitet wurde, wies die unten aufgeführten Gewichtsprozente auf. Bei den angegebenen Zink-Borat-Impfkristallen und anderen Komponenten handelte es sich um die gleichen wie in Beispiel 1.

| Komponente | Gew.-% |
|---|---|
| GAL1943¹ | 30 |
| PD997 | 26 |
| ^{*}2991 Pigment | 27 |
| Zink-Borat-Kristallkeim | 17 |

| | |
|---|---|
| ¹GAL1943 ist eine kommerziell von Cerdec Corporation erhältliche zinkhaltige Fritte. | |

### Beispiel 3

Eine Emaille-Zusammensetzung, die gemäß dem Verfahren von Beispiel 1 zubereitet wurde, wies die unten aufgeführten Gewichtsprozente auf. Bei den angegebenen Zink-Borat-Impfkristallen und anderen Komponenten handelte es sich um die gleichen wie in Beispiel 1.

| Komponente | Gew.-% |
|---|---|
| E-8012¹ | 45 |
| PD997 | 25 |
| ∗2991 Pigment | 25 |
| Zink-Borat-Kristallkeim | 5 |

| | |
|---|---|
| ¹E-8012 ist eine kommerziell von Cerdec Corporation erhältliche zinkhaltige Fritte. | |

### Beispiel 4

Eine Emaille-Zusammensetzung, die gemäß dem Verfahren von Beispiel 1 zubereitet wurde, wies die unten aufgeführten Gewichtsprozente auf. Bei den angegebenen Zink-Borat-Impfkristallen und anderen Komponenten handelte es sich um die gleichen wie in den Beispielen 1 und 3.

| Komponente | Gew.-% |
|---|---|
| E-8012 | 20 |
| RD-2012¹ | 40 |
| ∗2991 Pigment | 31 |
| Zink-Borat-Kristallkeim | 7,5 |
| Silicium-Metall² | 1,5 |

| | |
|---|---|
| ¹RD-2012 ist eine kommerziell von Cerdec Corporation erhältliche zinkhaltige Fritte. | |
| ²Das Silicium-Metall ist ein gegen Silber-Durchblutung beständiger Zusatzstoff und stammte von Elkem. | |

### Beispiel 5

Die folgende solubilisierte Emaille-Zusammensetzung ist eine typische Formulierung, die zum Siebdrucken auf ein Glassubstrat verwendet werden kann, das gebrannt und preßgeformt werden soll.

| Inhaltsstoff | Gew.-% |
|---|---|
| zinkhaltige Fritte | 45 |
| Pigment | 19 |
| Zink-Borat-Impfkristalle | 11 |
| Bindemittel | 25 |

Die vorliegende Erfindung wurde unter Bezugnahme auf Illustrationen und Beispiele beschrieben und ist nicht auf die zuvor genannten speziellen Ausgestaltungen beschränkt. Dem Fachmann sollte daher klar sein, daß im Rahmen der vorliegenden Erfindung gewisse offenkundige Modifikationen möglich sind, ohne daß vom Umfang der beigefügten Ansprüche abgewichen wird.

## Patentansprüche

1. Keramikemaille-Zusammensetzung für die Emaillierung von Glassubstraten, umfassend 30 - 80 Gew.-% einer zinkhaltigen Oxidfritte, 1 - 25 Gew.-% eines kristallinen Zink-Borat-Kristallkeimmaterials, 20 - 35 Gew.-% eines Pigments und 10 - 40 Gew.-% eines organischen Bindemittels.

2. Zusammensetzung nach Anspruch 1, in der die zinkhaltige Oxidfritte eine Zinkquelle und eine Borquelle enthält, die aus der Gruppe bestehend aus Zinkoxid und Boroxid, Zink-Borsilicat, Zink-Borat und Gemischen davon gewählt werden.

3. Zusammensetzung nach Anspruch 1, in der das Zink-Borat-Kristallkeimmaterial in der Form von Impfkristallen in der Zusammensetzung vorliegt.

4. Zusammensetzung nach Anspruch 3, in der die Zink-Borat-Impfkristalle wenigstens eine Phase enthalten, die aus Zn₃B₂O₆ und Zn(BO₂)₂ ausgewählt wird.

5. Zusammensetzung nach Anspruch 1, ferner umfassend ein gegen Silber-Durchblutung beständiges eisen-, silicium-oder zinkhaltiges Material.

6. Verfahren zum Zubereiten einer Keramikemaille-Zusammensetzung, umfassend das Verbinden von 30-80 Gew.-% einer zinkhaltigen Oxidfritte, 1-25 Gew.-% eines Zink-Borat-Kristallkeimmaterials, 20-35 Gew.-% eines Pigments und 10-40 Gew.-% eines organischen Bindemittels.

7. Verfahren zum Formen eines Glassubstrates mit einem anhaftenden Keramikemaille-Überzug, umfassend die folgenden Schritte: Auftragen einer Keramikemaille-Zusammensetzung nach Anspruch 1 auf das Glassubstrat, Erhitzen des überzogenen Glassubstrates auf eine erhöhte Temperatur zum Aufschmelzen der Komponenten der Keramikemaille-Zusammensetzung auf das Glassubstrat.

8. Verfahren nach Anspruch 7, in dem die Keramikemaille-Zusammensetzung auf wenigstens einen Teil der Peripherie des Glassubstrates aufgetragen wird.

9. Verfahren nach Anspruch 7, ferner umfassend die folgenden Schritte: Ausüben eines Formungsdrucks mit einer Formstanze auf das erhitzte Glas und Trennen des geformten Glases von der Formstanze.

10. Glassubstrat mit einem anhaftenden Keramikemaille-Überzug, wobei der genannte Keramikemaille-Überzug zum Teil aus einem kristallinen Zink-Borat-Material besteht.

11. Überzogenes Glassubstrat nach Anspruch 10, wobei der Überzug wenigstens auf einem Teil der Peripherie des Glassubstrates aufgetragen ist.

## Claims

1. Ceramic enamel composition for enamelling glass substrates comprising 30-80 wt.% of an oxide frit containing zinc, 1-25 wt.% of a crystalline zinc borate crystal nucleus material, 20-35 wt.% of a pigment and 10-40 wt.% of an organic binder.

2. Composition according to claim 1, in which the oxide frit containing zinc contains a source of zinc and a source of boron, which are selected from the group consisting of zinc oxide and boron oxide, zinc borosilicate, zinc borate and mixtures thereof.

3. Composition according to claim 1, in which the zinc borate crystal nucleus material is present in the composition in the form of seed crystals.

4. Composition according to claim 3, in which the zinc borate seed crystals contain at least one phase which is selected from among Zn₃B₂O₆ and Zn(BO₂)₂.

5. Composition according to claim 1 furthermore comprising a material containing iron, silicon or zinc which is resistant to strike-through by silver.

6. Process for the preparation of a ceramic enamel composition, said process comprising combining 30-80 wt.% of an oxide frit containing zinc, 1-25 wt.% of a zinc borate crystal nucleus material, 20-35 wt.% of a pigment and 10-40 wt.% of an organic binder.

7. Process for shaping a glass substrate having an adhering ceramic enamel coating comprising the following steps: application of a ceramic enamel composition according to claim 1 onto the glass substrate, heating the coated glass substrate to an elevated temperature to fuse the components of the ceramic enamel composition onto the glass substrate.

8. Process according to claim 7, in which the ceramic enamel composition is applied onto at least part of the periphery of a glass substrate.

9. Process according to claim 7, furthermore comprising the following steps: application of a shaping pressure onto the heated glass with a shaping punch and separation of the shaped glass from the shaping punch.

10. Glass substrate having an adhering ceramic enamel coating, wherein the stated ceramic enamel coating partially consists of a crystalline zinc borate material.

11. Coated glass substrate according to claim 10, wherein the coating is applied to at least part of the periphery of the glass substrate.

## Revendications

1. Composition d'émail de céramique pour l'émaillage de substrat de verre comprenant de 30 à 80 % en poids d'une fritte d'oxyde contenant du zinc, de 1 à 25 % en poids d'un matériau germe de cristal de borate de zinc cristallin, de 20 à 35 % en poids d'un pigment et de 10 à 40 % en poids d'un liant organique.

2. Composition selon la revendication 1,
dans laquelle
la fritte d'oxyde contenant du zinc contient une source de zinc et une source de bore, qui sont choisis dans le groupe constitué par l'oxyde de zinc et l'oxyde de bore, le borosilicate de zinc, le borate de zinc et leurs mélanges.

3. Composition selon la revendication 3,
dans laquelle
le matériau germe de cristal de borate de zinc se présente sous la forme de cristaux d'ensemencement dans la composition.

4. Composition selon la revendication 3,
dans laquelle
les cristaux d'ensemencement de borate de zinc contiennent au moins une phase qui est choisie parmi Zn₃B₂O₆ et Zn(BO₂)₂.

5. Composition selon la revendication 1,
comprenant en outre
un matériau contenant du fer, du silicium ou du zinc résistant à la pénétration de l'argent.

6. Procédé de préparation d'une composition d'émail de céramique comprenant la réunion de 30 à 80 % en poids d'une fritte d'oxyde contenant du zinc, de 1 à 25 % en poids d'un matériau germe de cristal de borate de zinc, de 20 à 35 % en poids d'un pigment et de 10 à 40 % en poids d'un liant organique.

7. Procédé de façonnage d'un substrat de verre avec un revêtement d'émail céramique qui y adhère,
comprenant les étapes suivantes :
dépôt d'une composition d'émail de céramique selon la revendication 1 sur le substrat de verre, chauffage du substrat de verre revêtu à une température augmentée en vu de faire fondre les composants de la composition d'émail de céramique sur le substrat de verre.

8. Procédé selon la revendication 7,
dans lequel
la composition d'émail de céramique est déposée sur au moins une partie de la périphérie du substrat de verre.

9. Procédé selon la revendication 7,
comprenant en outre les étapes suivantes :
application d'une pression de façonnage avec un profil de moulage sur le verre chauffé et séparation du verre façonné d'avec le profil.

10. Substrat de verre avec revêtement d'émail de céramique adhésif, le revêtement d'émail de céramique mentionné étant constitué en partie d'un matériau de borate de zinc cristallin.

11. Substrat de verre revêtu selon la revendication 10,
dans lequel
le revêtement est déposé au moins sur une partie de la périphérie du substrat de verre.
